# EUROPÄISCHE PATENTANMELDUNG

(11) **EP 3 636 398 A1**
(43) Veröffentlichungstag der Anmeldung: **15.04.2020**
(21) Anmeldenummer: 19197522.6
(22) Anmeldetag: 16.09.2019
(51) Int. Cl.: B25J 15/00, B23Q 3/00, B25J 19/00, B25J 19/06

(54) **GREIFERVORRICHTUNG MIT EINER SCHUTZEINHEIT**

(30) Priorität: 17.09.2018 DE 102018122703
(71) Anmelder: E. Zoller GmbH & Co. KG, 74385 Pleidelsheim (DE)
(72) Erfinder: Zoller, Alexander, 74385 Pleidelsheim (DE); Pfau, Christian, 74379 Ingersheim (DE)
(74) Vertreter: Daub, Thomas

(57) **Zusammenfassung**

Die Erfindung geht aus von einer Greifervorrichtung (10a; 10b; 10c) mit zumindest einer Greifereinheit (50a; 50b; 50c), welche zumindest dazu vorgesehen ist, in zumindest einem Arbeitsschritt ein Werkzeug (26a; 26b; 26c) und/oder eine Werkzeugaufnahme mit zumindest einem Werkzeug (26a; 26b; 26c) zu greifen und/oder zu bewegen, und mit zumindest einer Schutzeinheit (70a; 70b; 70c), welche dazu vorgesehen ist, zumindest einen Arbeitsbereich des Werkzeugs (26a; 26b; 26c) zumindest teilweise während des Arbeitsschritts zumindest im Wesentlichen zu umschließen.

Es wird vorgeschlagen, dass die Schutzeinheit (70a; 70b; 70c) zumindest teilweise während des Arbeitsschritts zumindest an der Greifereinheit (50a; 50b; 50c) befestigt ist.

## Beschreibung

### Stand der Technik

Die Erfindung betrifft eine Greifervorrichtung nach dem Oberbegriff des Anspruchs 1.

Aus dem Stand der Technik sind kollaborative Roboter mit einer Greifervorrichtung und mit einer Schutzeinheit bekannt, wobei die Schutzeinheit die ganze Greifervorrichtung umschließt.

Die Aufgabe der Erfindung besteht insbesondere darin, eine gattungsgemäße Vorrichtung mit verbesserten Eigenschaften hinsichtlich einer Interaktivität zwischen Mensch und Maschine bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Greifervorrichtung mit zumindest einer Greifereinheit, welche zumindest dazu vorgesehen ist, in zumindest einem Arbeitsschritt ein Werkzeug und/oder eine Werkzeugaufnahme mit zumindest einem Werkzeug zu greifen und/oder zu bewegen, und mit zumindest einer Schutzeinheit, welche dazu vorgesehen ist, zumindest einen Arbeitsbereich des Werkzeugs zumindest teilweise während des Arbeitsschritts zumindest im Wesentlichen zu umschließen.

Es wird vorgeschlagen, dass die Schutzeinheit zumindest teilweise während des Arbeitsschritts zumindest an der Greifereinheit befestigt ist.

Unter einer "Greifervorrichtung" soll insbesondere eine Vorrichtung verstanden werden, welche dazu vorgesehen ist, vorzugsweise das Werkzeug zu greifen und/oder zu bewegen. Insbesondere ist die Greifervorrichtung dazu vorgesehen, das Werkzeug zumindest teilautomatisiert zu greifen und/oder zu bewegen. Unter "teilautomatisiert" soll insbesondere verstanden werden, dass ein Greifablauf und/oder ein Bewegungsablauf, insbesondere durch einen Benutzer, steuerbar und/oder programmierbar ist. Insbesondere weist die Greifervorrichtung zumindest einen Greiferarm auf, welcher dazu vorgesehen ist das Werkzeug zu bewegen. Vorzugsweise weist der Greiferarm zumindest eine Lagereinheit auf, welche insbesondere dazu vorgesehen ist, eine relative Rotationsbewegung zwischen zwei Teilen des Greiferarms bereitzustellen. Insbesondere ist der Greiferarm dazu vorgesehen, bei einer Aufnahme des Werkzeugs die Greifereinheit relativ zum Werkzeug zu positionieren. Vorzugsweise ist der Greiferarm dazu vorgesehen, das Werkzeug mit der Greifereinheit zu bewegen.

Unter einer "Greifereinheit" soll insbesondere eine Einheit verstanden werden, welche dazu vorgesehen ist, direkten Kontakt mit dem Werkzeug aufzunehmen. Insbesondere ist die Greifereinheit lediglich dazu vorgesehen, das Werkzeug zu fixieren und insbesondere mittels des Greiferarms das Werkzeug zu bewegen. Vorzugsweise ist die Greifereinheit mit dem Greiferarm verbunden. Unter "verbunden" soll in diesem Zusammenhang insbesondere eine Formschlussverbindung und/oder eine Kraftschlussverbindung verstanden werden, wie zum Beispiel durch zumindest eine Schraubverbindung und/oder eine Nietverbindung und/oder eine Rastverbindung und/oder eine Riegelverbindung und/oder dergleichen. Insbesondere ist die Greifereinheit über ein Gelenk mit dem Greiferarm gekoppelt.

Unter einem "Werkzeug" soll insbesondere ein Element verstanden werden, welches dazu vorgesehen ist, ein Bauteil zu bearbeiten und/oder zu verändern, insbesondere zu bohren und/oder zu drehen und/oder zu fräsen und/oder zu schneiden und/oder zu schleifen und/oder dergleichen. Vorzugsweise ist das Werkzeug als Bohrer und/oder als Fräser und/oder als Schneidewerkzeug und/oder als weiteres einem Fachmann als sinnvoll erscheinendes Werkzeug ausgebildet, wobei das Werkzeug insbesondere zumindest eine Schneidekante und/oder Spitze und/oder dergleichen aufweist. Unter einem "Arbeitsbereich" eines Werkzeugs soll insbesondere ein Bereich verstanden werden, in welchem zumindest eine Schneidekante des Werkzeugs, vorzugsweise alle Schneidekanten des Werkzeugs und/oder Spitze und/oder dergleichen, angeordnet ist. Insbesondere ist der Arbeitsbereich des Werkezeugs zumindest scharf und/oder spitz und/oder dergleichen und ist insbesondere bei einem direkten Kontakt mit dem Nutzer und/oder in der Nähe des Nutzers verletzungsgefährlich. Unter einer "Werkzeugaufnahme" soll insbesondere ein Werkzeugfutter verstanden werden, welches dazu vorgesehen ist, zu halten und/oder zu stabilisieren, insbesondere bei einer Vermessung und/oder Einstellung des Werkzeugs mit einem Einstell- und Messgerät. Vorzugsweise ist die Werkzeugaufnahme zu einer Halterung des Werkzeugs in einer Werkzeugmaschine vorgesehen.

Unter einem "Arbeitsschritt" soll insbesondere ein zeitlicher Abschnitt verstanden werden, in welchem die Greifervorrichtung zumindest teilweise Arbeit verrichtet. Unter "zumindest teilweise während des Arbeitsschritts" soll in diesem Zusammenhang während insbesondere zumindest 20%, vorzugsweise zumindest 60%, vorteilhaft zumindest 90% des Arbeitsschritts und besonders vorteilhaft während des gesamten Arbeitsschritts verstanden werden.

Unter einer "Schutzeinheit" soll insbesondere eine Einheit verstanden werden, welche dazu vorgesehen ist, einen Kontakt und/oder eine Berührung durch einen Nutzer und/oder ein Objekt mit dem Werkzeug, insbesondere mit dem Arbeitsbereich des Werkzeugs, zumindest im Wesentlichen zu verhindern. Insbesondere weist die Schutzeinheit zumindest ein Schutzelement auf, welches dazu vorgesehen ist, ein physisches Durchdringen der Schutzeinheit zumindest im Wesentlichen zu verhindern. Unter "zumindest im Wesentlichen zu umschließen" soll insbesondere verstanden werden, dass zumindest im Wesentlichen alle Normalen der Flächen des Arbeitsbereichs zumindest mit der Schutzeinheit schneiden, wobei die Schutzeinheit den Arbeitsbereich insbesondere um zumindest 50%, vorzugsweise um mindestens 60%, vorteilhaft um zumindest 70% und besonders vorteilhaft um mindestens 80% umschließt. Besonders bevorzugt ist die Schutzeinheit lediglich an der Greifereinheit befestigt. Alternativ und/oder zusätzlich ist die Greifereinheit insbesondere zumindest teilweise in dem Arbeitsschritt an zumindest einer weiteren Einheit, insbesondere dem Greiferarm, befestigt.

Unter "befestigt" soll in diesem Zusammenhang insbesondere eine Formschlussverbindung und/oder eine Kraftschlussverbindung verstanden werden, wie zum Beispiel über eine Rastverbindung und/oder eine Riegelverbindung und/oder eine Magnetverbindung und/oder eine Nietverbindung und/oder dergleichen. Insbesondere ist die Schutzeinheit in zumindest einem Betriebszustand zumindest teilweise von der Greifereinheit lösbar ausgebildet. Insbesondere lässt sich die Schutzeinheit, vorzugsweise in einem Ruhezustand der Greifereinheit, von der Greifereinheit entfernen. Insbesondere weist die Greifervorrichtung zumindest eine Positioniereinheit auf, welche dazu vorgesehen ist, vor dem Arbeitsschritt und/oder während dem Arbeitsschritt die Schutzeinheit zumindest an der Greifereinheit zu befestigen. Insbesondere weist die Positioniereinheit zumindest einen Positionierarm auf, welcher zumindest teilautomatisiert die Schutzeinheit, insbesondere an der Greifereinheit, befestigt. Alternativ wird die Schutzeinheit vor dem Arbeitsschritt und/oder während dem Arbeitsschritt von zumindest einem Nutzer zumindest an der Greifereinheit befestigt.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere erreicht werden, dass ein Nutzer zumindest im Wesentlichen gefahrlos direkt mit der Greifervorrichtung arbeiten kann. Zudem kann vorteilhaft ein interaktives Arbeiten zwischen Mensch und Maschine auch bei verletzungsgefährlichen Werkzeugen ermöglicht werden. Ferner kann vorteilhaft eine Flexibilität der Schutzeinheit weiter verbessert werden. Weiterhin kann vorteilhaft eine Vereinfachung der Schutzeinheit und/oder ein Schützen eines Bedieners erreicht werden. Zudem kann eine universelle Nutzung der Schutzeinheit auf unterschiedlichen Greifereinheiten weiter verbessert werden. Ferner kann vorteilhaft ein Kostenaufwand für eine Schutzeinheit weiter verringert werden. Weiterhin kann vorteilhaft ein Platzaufwand der Schutzeinheit stark reduziert werden.

In einer weiteren Ausgestaltung der Erfindung wird vorgeschlagen, dass eine Haupterstreckungsrichtung der Schutzeinheit zumindest im Wesentlichen winkelkonstant zu der Greifereinheit, insbesondere einer Haupterstreckungsebene der Greifereinheit und/oder einer Greifebene der Greifeinheit, ist. Besonders bevorzugt bewegt sich die Schutzeinheit bei einer Bewegung der Greifereinheit mit. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter einer "Greifebene" soll insbesondere eine Ebene verstanden werden, welche zumindest im Wesentlichen eine Bewegungsgerade der Greifeinheit beim Greifen des Werkzeugs aufweist. Vorzugsweise ist die Greifebene zumindest im Wesentlichen senkrecht zu einer Haupterstreckungsrichtung des Werkzeugs in dem Arbeitsschritt, in dem das Werkzeug von der Greifereinheit gegriffen wird. "Winkelkonstant" soll insbesondere eine Ausrichtung einer Richtung relativ zu einer Bezugsrichtung definieren, wobei die Richtung und die Bezugsrichtung, insbesondere in einer Ebene betrachtet, einen konstanten Winkel einschließen und der Winkel, insbesondere bei einer Bewegung der Schutzeinheit und/oder der Greifereinheit, eine maximale Abweichung von insbesondere kleiner als 8°, vorteilhaft kleiner als 5° und besonders vorteilhaft kleiner als 2° aufweist. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Hierdurch kann vorteilhaft eine Komplexität der Schutzeinheit weiter verringert werden. Ferner kann vorteilhaft eine Stabilität der Schutzeinheit weiter verbessert werden.

Ferner wird vorgeschlagen, dass die Schutzeinheit zumindest im Wesentlichen haubenförmig ausgestaltet ist. Unter "haubenförmig" soll insbesondere zylinderförmig verstanden werden, wobei vorzugsweise zumindest ein Ende des Zylinders zumindest im Wesentlichen geschlossen ist, wobei der Zylinder vorzugsweise mit einer tangierenden Halbkugel geschlossen ist. Hierdurch kann vorteilhaft eine Komplexität der Schutzeinheit weiter verringert werden. Ferner kann vorteilhaft durch die abgerundeten Kanten der haubenförmigen Schutzeinheit eine zusätzliche Gefährdung für den Bediener minimiert werden.

Weiterhin wird vorgeschlagen, dass die Schutzeinheit zumindest eine invariable Öffnung aufweist, welche dazu vorgesehen ist, das Werkzeugelement aufzunehmen. Unter "invariabel" soll insbesondere verstanden werden, dass die Größe, insbesondere der Flächeninhalt, der Öffnung konstant ist. Vorzugsweise ist die Öffnung der Schutzeinheit zumindest im Wesentlichen parallel zu der Greifebene der Greifereinheit. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere bildet die Öffnung zumindest teilweise das Ende des haubenförmigen Zylinders, insbesondere ein Ende des Zylinders. Hierdurch kann vorteilhaft eine Aufnahme eines Werkzeugs über die Greifeinheit mit der Schutzeinheit möglichst einfach bereitgestellt werden.

Zudem wird vorgeschlagen, dass die Schutzeinheit zumindest im Wesentlichen einstückig ausgebildet ist. Vorteilhaft soll unter "einstückig" auch einteilig verstanden werden. Unter "einteilig" soll insbesondere in einem Stück geformt verstanden werden. Vorzugsweise wird die Schutzeinheit aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Hierdurch kann vorteilhaft eine Komplexität der Schutzeinheit weiter verringert werden. Ferner kann vorteilhaft eine Erhöhung einer Stabilität der Schutzeinheit erreicht werden. Zudem kann vorteilhaft eine Schutzleistung der Schutzeinheit weiter verbessert werden.

Ferner wird vorgeschlagen, dass die Greifereinheit zumindest ein Greiferelement aufweist, welches dazu vorgesehen ist, das Werkzeug zu greifen, wobei die Schutzeinheit zumindest im Wesentlichen von einer Bewegung des Greiferelements unabhängig gekoppelt ist. Unter einem "Greiferelement" soll insbesondere ein Element verstanden werden, welches zu einem Fixieren und/oder Einspannen des Werkzeugs vorgesehen ist, beispielsweise zumindest ein Finger eines Zwei- oder Mehrfingergreifers, zumindest ein Magnetelement eines magnetischen Greifers und/oder ein pneumatisches Greifelement. Vorzugsweise wird die Greifebene zumindest im Wesentlichen durch eine Bewegungsgerade des Greiferelements, vorzugsweise durch Bewegungsgeraden zweier getrennt voneinander ausgebildeter Greiferelemente, gebildet. Unter "unabhängig" soll insbesondere verstanden werden, dass das Greiferelement relativ zur Schutzeinheit zumindest im Wesentlichen bewegungsfrei ausgebildet ist. Vorzugsweise ist die Schutzeinheit statisch an der Greifereinheit befestigt, wobei das Greiferelement zu einem fixieren und/oder einspannen des Werkzeugs sich relativ zur Schutzeinheit bewegt. Hierdurch kann vorteilhaft ein Schutz durch die Schutzeinheit vorteilhaft verbessert werden. Hierdurch kann vorteilhaft eine bestmögliche Zuverlässigkeit der Schutzeinheit bereitgestellt werden.

Alternativ wird vorgeschlagen, dass die Greifereinheit zumindest ein erstes Greiferelement und zumindest ein zweites Greiferelement aufweist, wobei das erste und das zweite Greiferelement dazu vorgesehen sind, zumindest das Werkzeug einzuspannen, wobei die Schutzeinheit zumindest teilweise an dem ersten Greiferelement und/oder dem zweiten Greiferelement befestigt ist. Insbesondere bewegt sich die Schutzeinheit bei einer Bewegung des ersten Greiferelements und/oder des zweiten Greiferelements zumindest teilweise mit. Hierdurch kann vorteilhaft eine Aufnahme des Werkzeugs vereinfacht werden.

Zudem wird vorgeschlagen, dass die Schutzeinheit zumindest ein erstes Schutzelement, welches an dem ersten Greiferelement befestigt ist, und zumindest ein zweites Schutzelement, welches zumindest an dem zweiten Greiferelement befestigt ist, aufweist. Insbesondere ist die Schutzeinheit zumindest zweiteilig ausgebildet, wobei das erste Schutzelement und das zweite Schutzelement die Schutzeinheit zumindest teilweise, vorzugsweise vollständig, bilden. Hierdurch kann vorteilhaft eine Aufnahme des Werkzeugs weiter vereinfacht werden. Zudem kann eine möglichst energieeffiziente Bewegung der Schutzeinheit bereitgestellt werden.

Ferner wird vorgeschlagen, dass das erste Greiferelement und das zweite Greiferelement bewegungstechnisch mit dem ersten Schutzelement und/oder dem zweiten Schutzelement gekoppelt sind. Unter einer "bewegungstechnischen Kopplung" soll insbesondere verstanden werden, dass sich bei einer Bewegung das erste und/oder das zweite Schutzelement mitbewegt, wobei eine Bewegungsenergie lediglich durch das Greiferelement bereitgestellt wird. Insbesondere soll unter einer "bewegungstechnischen Kopplung verstanden werden, dass die Bewegung des ersten Schutzelements und/oder des zweiten Schutzelements zumindest im Wesentlichen der Bewegung des ersten Greiferelements und/oder des zweiten Greiferelements entspricht. Insbesondere ist das erste Schutzelement und/oder das zweite Schutzelement über ein Gelenk und/oder über eine feste Verbindung, wie zum Beispiel einer Schraubverbindung und/oder einer Nietverbindung, mit dem Greiferelement verbunden. Hierdurch kann vorteilhaft eine Optimierung der energieeffizienten Bewegung erreicht werden. Ferner kann vorteilhaft eine Zuverlässigkeit der Schutzeinheit weiter verbessert werden.

Weiterhin wird vorgeschlagen, dass eine Bewegungsgerade des ersten Schutzelements und/oder des zweiten Schutzelements bei einem Öffnen und/oder Schließen der Schutzelemente zumindest im Wesentlichen parallel zu einer Bewegungsgerade des ersten Greiferelements und/oder des zweiten Greiferelements ist. Unter einer "Bewegungsgeraden" eines Elements, insbesondere des ersten und/oder des zweiten Schutzelements, soll insbesondere eine Gerade verstanden werden, entlang derer sich der Schwerpunkt des Elements bei der Bewegung zumindest im Wesentlichen bewegt. Hierdurch kann vorteilhaft eine Aufnahme des Werkzeugs mit der Greifeinheit seitlich und von oben bereitgestellt werden. Ferner kann vorteilhaft eine einfache und effiziente Bewegung der Schutzelemente bereitgestellt werden.

Zudem wird vorgeschlagen, dass die Greifervorrichtung zumindest eine Steuereinheit aufweist, welche dazu vorgesehen ist, mittels eines Sensors, Ausmaße des Werkzeugs zu erkennen und darauf basierend ein Bewegen der Schutzeinheit zu steuern. Unter einer "Steuereinheit" soll insbesondere eine elektronische Einheit verstanden werden, die vorzugsweise in einer Steuer- und/oder Regeleinheit einer Greifervorrichtung zumindest teilweise integriert ist und die vorzugsweise dazu vorgesehen ist, zumindest die eine Bewegung des ersten Greiferelements und/oder des zweiten Greiferelements und/oder der Schutzeinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Vorzugsweise weist die Greifereinheit den Sensor auf. Vorzugsweise ist die Steuereinheit dazu vorgesehen, mittels des Sensors eine Kollisionsvorhersage zu erfassen und darauf basierend die Schutzeinheit zu steuern. Unter "Bewegen" soll in diesem Zusammenhang insbesondere ein Schließen und/oder Öffnen und/oder ein Aufsetzen der Schutzeinheit auf das Werkzeug verstanden werden. Hierdurch kann vorteilhaft eine bessere Lebensdauer der Schutzeinheit erreicht werden. Ferner kann vorteilhaft erreicht werden, dass die Greifereinheit größere Werkzeuge aufnehmen kann. Zudem kann eine universelle Nutzung der Schutzeinheit auf unterschiedlichen Greifereinheiten weiter verbessert werden.

Ferner wird vorgeschlagen, dass das erste Schutzelement und/oder das zweite Schutzelement zumindest im Wesentlichen drehbar gelagert sind. Unter "drehbar" soll insbesondere schwenkbar verstanden werden, wobei das erste Schutzelement und/oder das zweite Schutzelement zumindest um eine Rotationsachse rotieren. Insbesondere ist das erste Schutzelement und/oder das zweite Schutzelement mit einem Drehgelenk an der Greifereinheit, insbesondere an dem ersten Greiferelement und/oder dem zweiten Greiferelement, befestigt. Hierdurch kann vorteilhaft eine Flexibilität der Greifereinheit und/oder der Schutzeinheit weiter verbessert werden.

Weiterhin wird vorgeschlagen, dass die Rotationsachse des ersten Schutzelements gleich der Rotationsachse des zweiten Schutzelements ist. Vorzugsweise soll unter "gleich" zumindest im Wesentlichen gleich verstanden werden. Insbesondere ist die Rotationsachse bei einem Rotieren des ersten und des zweiten Schutzelements zumindest im Wesentlichen fest. Alternativ bewegt sich die Rotationsachse des ersten Schutzelements und des zweiten Schutzelements bei einem Drehen des ersten Schutzelements und des zweiten Schutzelements. Hierdurch kann vorteilhaft ein einfaches Drehen der Schutzelemente bereitgestellt werden. Ferner kann vorteilhaft eine Schutzleistung des ersten Schutzelements und des zweiten Schutzelements weiter verbessert werden. Zudem kann vorteilhaft ein seitliches Anfahren des Werkzeugs mit der Greifereinheit bereitgestellt werden.

Zudem wird ein Verfahren mit einer Greifervorrichtung vorgeschlagen, wobei in zumindest einem Arbeitsschritt bei einem Greifen und/oder Bewegen eines Werkzeugs und/oder einer Werkzeugaufnahmeeinheit zumindest ein Arbeitsbereich des Werkzeugs zumindest im Wesentlichen automatisiert umschlossen wird. Unter "automatisiert" soll insbesondere verstanden werden, dass ein Greifablauf und/oder ein Bewegungsablauf, insbesondere durch einen Benutzer, steuerbar und/oder programmierbar ist. Insbesondere wird der Bewegungsablauf in dem Arbeitsschritt zumindest im Wesentlichen durch die Steuereinheit gesteuert.

Hierdurch kann vorteilhaft erreicht werden, dass ein Nutzer zumindest im Wesentlichen gefahrlos direkt mit der Greifervorrichtung arbeiten kann. Zudem kann vorteilhaft ein interaktives Arbeiten zwischen Mensch und Maschine auch bei verletzungsgefährlichen Werkzeugen ermöglicht werden. Ferner kann vorteilhaft eine Flexibilität der Schutzeinheit weiter verbessert werden. Weiterhin kann vorteilhaft eine Vereinfachung der Schutzeinheit und/oder ein Schützen eines Bedieners erreicht werden. Zudem kann eine universelle Nutzung der Schutzeinheit auf unterschiedlichen Greifereinheiten weiter verbessert werden. Ferner kann vorteilhaft ein Kostenaufwand für eine Schutzeinheit weiter verringert werden. Weiterhin kann vorteilhaft ein Platzaufwand der Schutzeinheit stark reduziert werden.

Ferner wird ein kollaborativer Roboter mit einer Greifervorrichtung vorgeschlagen. Unter einem "kollaborativen Roboter" soll insbesondere ein Cobot verstanden werden, welcher dazu vorgesehen ist, in der Nähe von Menschen und/oder mit Menschen zu arbeiten. Hierdurch kann vorteilhaft ein interaktives Arbeiten zwischen Mensch und Maschine ermöglicht werden.

Weiterhin wird ein Einstell- und Messgerätesystem mit einer Greifervorrichtung vorgeschlagen. Unter einem "Einstell- und Messgerätesystem" soll insbesondere ein System verstanden werden, welches zumindest eine Einstell- und Messgerätevorrichtung aufweist, welche zumindest ein Werkzeug, insbesondere mit unterschiedlichen Parametern, vermisst und/oder einstellt. Insbesondere ist der kollaborative Roboter dazu vorgesehen, mit der Einstell- und Messgerätevorrichtung zumindest teilweise zu kommunizieren und/oder zu arbeiten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Einstell- und Messgerätesystem mit einem kollaborativen Roboter und mit einer Greifervorrichtung,
- Fig. 2: zumindest einen Teil der Greifervorrichtung mit einer Greifereinheit und mit einer Schutzeinheit,
- Fig. 3: zumindest einen Teil der Greifervorrichtung mit der Greifereinheit und mit der Schutzeinheit in einem Arbeitsschritt,
- Fig. 4: ein Ablaufdiagramm eines Verfahrens mit der Greifervorrichtung,
- Fig. 5: zumindest einen Teil einer alternativen Greifervorrichtung eines weiteren Ausführungsbeispiels mit einer Greifereinheit und mit einer alternativen Schutzeinheit, welche zumindest ein erstes Schutzelement und ein zweites Schutzelement aufweist,
- Fig. 6: zumindest einen Teil der alternativen Greifervorrichtung mit der Greifereinheit und der alternativen Schutzeinheit in einem Arbeitsschritt,
- Fig. 7: zumindest einen Teil der alternativen Greifervorrichtung in einer Draufsicht und
- Fig. 8: zumindest einen Teil einer zusätzlichen alternativen Greifervorrichtung eines zusätzlichen weiteren Ausführungsbeispiels mit einer Greifereinheit und mit einer zusätzlichen alternativen Schutzeinheit, welche zumindest ein erstes Schutzelement und ein zweites Schutzelement aufweist.

### Beschreibung der Ausführungsbeispiele

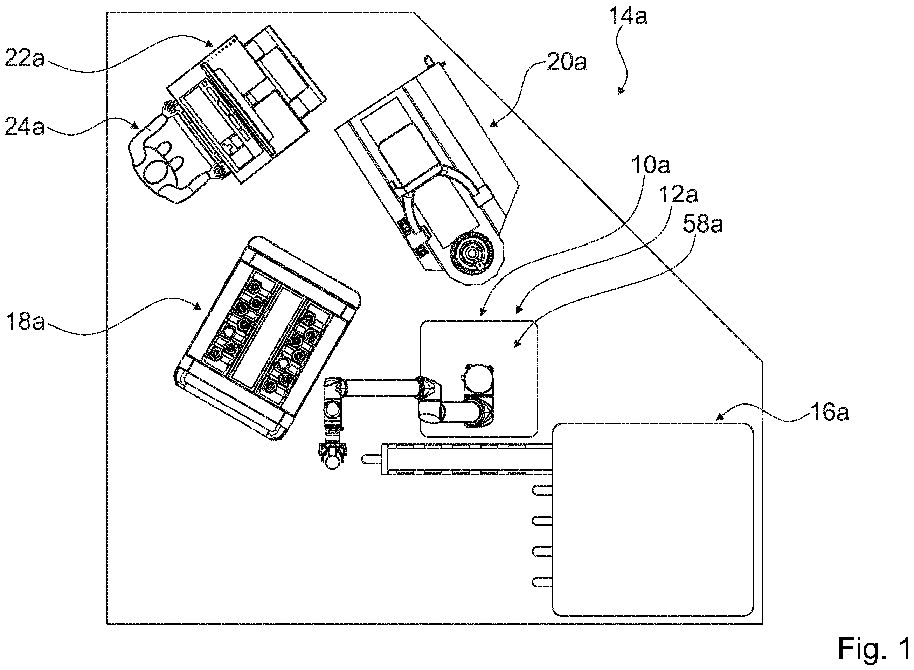

Die Figur 1 zeigt ein Einstell- und Messgerätesystem 14a. Das Einstell- und Messgerätesystem 14a ist zumindest dazu vorgesehen, ein Werkzeug 26a auszumessen und/oder eine Position des Werkzeugs 26a in einer Werkzeugaufnahme einzustellen. Das Einstell- und Messgerätesystem 14a weist zumindest einen Werkzeugschrank 16a auf. Der Werkzeugschrank 16a ist zu einer Aufbewahrung des Werkzeugs 26a vorgesehen. Der Werkzeugschrank 16a ist zu einer Bereitstellung des Werkzeugs 26a vorgesehen. Das Einstell- und Messgerätesystem 14a weist zumindest einen Werkzeugwagen 18a auf. Der Werkzeugwagen 18a ist mobil. Der Werkzeugwagen 18a ist zu einer Aufnahme des Werkzeugs 26a vorgesehen. Der Werkzeugwagen 18a ist dazu vorgesehen, das Werkzeug 26a zumindest zu transportieren. Das Einstell- und Messgerätesystem 14a weist zumindest ein Einstell- und Messgerät 20a auf. Das Einstell- und Messgerät 20a ist dazu vorgesehen, zumindest das Werkzeug 26a zu vermessen und/oder einzustellen. Das Einstell- und Messgerät 20a ist zu einer Aufnahme zumindest eines Werkzeugs 26a vorgesehen. Das Einstell- und Messgerätesystem 14a weist zumindest einen kollaborativen Roboter 12a auf. Das Einstell- und Messgerätesystem 14a weist zumindest eine Greifervorrichtung 10a auf. Der kollaborative Roboter 12a weist zumindest die Greifervorrichtung 10a auf. Der kollaborative Roboter 12a ist dazu vorgesehen, das Werkzeug 26a zwischen den Einheiten und/oder Geräten des Einstell- und Messgerätesystems 14a zu bewegen. Der kollaborative Roboter 12a bewegt das Werkzeug 26a zwischen dem Werkzeugschrank 16a und dem Einstell- und Messgerät 20a. Der kollaborative Roboter 12a bewegt sich zwischen dem Werkzeugwagen 18a und dem Einstell- und Messgerät 20a. Der kollaborative Roboter 12a bewegt sich zwischen dem Werkzeugschrank 16a und dem Werkzeugwagen 18a. Das Einstell- und Messgerätesystem 14a weist zumindest eine Bedieneinheit 22a auf. Die Bedieneinheit 22a ist dazu vorgesehen, das Einstell- und Messgerät 20a zu steuern. Die Bedieneinheit 22a ist zumindest dazu vorgesehen, den Werkzeugschrank 16a zu steuern. Die Bedieneinheit 22a ist dazu vorgesehen, eine Ausgabe über den Werkzeugschrank 16a zu steuern. Die Bedieneinheit 22a ist zumindest dazu vorgesehen, einen Bewegungsablauf des kollaborativen Roboters 12a zu steuern. Ein Nutzer 24a ist zumindest dazu vorgesehen, Steuerungsparameter der Bedieneinheit 22a bereitzustellen. Die Bedieneinheit 22a steuert zumindest den kollaborativen Roboter 12a nach den Steuerparametern.

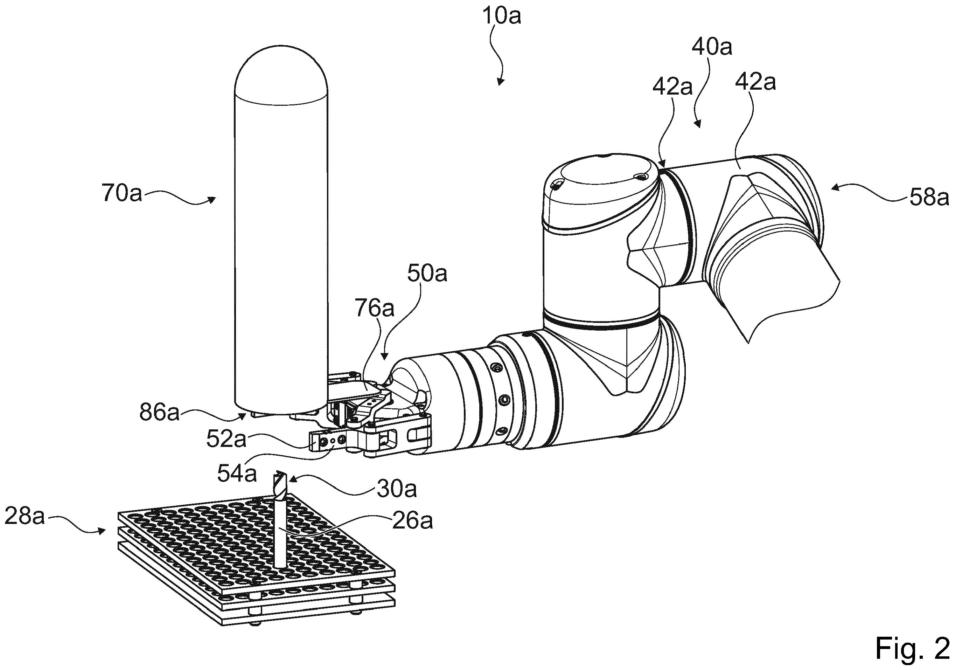

Die Figur 2 zeigt zumindest teilweise eine Greifervorrichtung 10a. Die Greifervorrichtung 10a bildet zumindest teilweise den kollaborativen Roboter 12a. Die Greifervorrichtung 10a weist zumindest einen Greiferarm 40a auf. Der Greiferarm 40a weist zumindest eine Lagereinheit 42a auf. Die Lagereinheit 42a ist zumindest als Drehgelenk ausgebildet. Die Lagereinheit 42a ist dazu vorgesehen, ein relatives Rotieren zwischen zwei Gelenkstangen 46a bereitzustellen. Der Übersicht halber wurden lediglich eine Lagereinheit 42a und eine Gelenkstange 46a mit Bezugszeichen versehen. Der Greiferarm 40a ist dazu vorgesehen, ein Bewegen relativ zum Werkzeug 26a bereitzustellen. Die Lagereinheit 42a ist dazu vorgesehen, ein Bewegen des Greiferarms 40a relativ zum Werkzeug 26a bereitzustellen. Die Greifervorrichtung 10a weist zumindest eine Greifereinheit 50a auf. Die Greifereinheit 50a ist zumindest dazu vorgesehen, in einem Arbeitsschritt ein Werkzeug 26a zu greifen. Die Greifereinheit 50a ist zumindest dazu vorgesehen, in dem Arbeitsschritt das Werkzeug 26a zu bewegen. Die Greifereinheit 50a ist dazu vorgesehen, mittels des Greiferarms 40a in dem Arbeitsschritt das Werkzeug 26a zu bewegen. Der Greiferarm 40a ist zu einem relativen Positionieren der Greifereinheit 50a zu dem Werkzeug 26a vorgesehen. Die Greifereinheit 50a ist dazu vorgesehen, das Werkzeug 26a aus einer Werkzeughalterung 28a zu entnehmen und/oder in die Werkzeughalterung 28a einzusetzen. Die Greifereinheit 50a ist dazu vorgesehen, das Werkzeug 26a aus einer Werkzeugaufnahme (nicht gezeigt) zu entnehmen und/oder in die Werkzeugaufnahme einzusetzen.

Alternativ oder zusätzlich ist die Greifereinheit 50a dazu vorgesehen, in einem Arbeitsschritt die Werkzeugaufnahme mit dem Werkzeug 26a zu greifen. Die Greifereinheit 50a ist zumindest dazu vorgesehen, in dem Arbeitsschritt die Werkzeugaufnahme mit zumindest einem Werkzeug 26a zu bewegen. Die Greifereinheit 50a ist dazu vorgesehen, mittels des Greiferarms 40a in dem Arbeitsschritt die Werkzeugaufnahme mit zumindest dem Werkzeug 26a zu bewegen. Der Greiferarm 40a ist zu einem relativen Positionieren der Greifereinheit 50a zu der Werkzeugaufnahme mit zumindest einem Werkzeug 26a vorgesehen. Alternativ oder zusätzlich ist die Greifereinheit 50a dazu vorgesehen, in einem Arbeitsschritt die Werkzeughalterung 28a mit dem Werkzeug 26a zu greifen. Die Greifereinheit 50a ist zumindest dazu vorgesehen, die Werkzeughalterung 28a mit dem Werkzeug 26a zu bewegen. Die Greifereinheit 50a ist dazu vorgesehen, mittels des Greiferarms 40a in dem Arbeitsschritt die Werkzeughalterung 28a mit zumindest dem Werkzeug 26a zu bewegen.

Die Greifereinheit 50a weist zumindest ein Greiferelement 52a auf. Das Greiferelement 52a ist dazu vorgesehen, das Werkzeug 26a zu greifen. Das Greiferelement 52a ist zumindest zu einer direkten Aufnahme des Werkzeugs 26a vorgesehen. Das Greiferelement 52a steht bei einem Bewegen und/oder Greifen des Werkzeugs 26a mit der Greifereinheit 50a zumindest im Wesentlichen in einem direkten Kontakt mit dem Werkzeug 26a. Die Greifereinheit 50a weist zumindest ein erstes Greiferelement 54a auf. Die Greifereinheit 50a weist zumindest ein zweites Greiferelement 56a auf. Das erste Greiferelement 54a und das zweite Greiferelement 56a sind dazu vorgesehen, das Werkzeug 26a einzuspannen. Die Greifereinheit 50a ist dazu vorgesehen, das Werkzeug 26a zwischen dem ersten Greiferelement 54a und dem zweiten Greiferelement 56a einzuspannen. Das erste Greiferelement 54a und das zweite Greiferelement 56a stehen bei einer Aufnahme des Werkzeugs 26a in einem direkten Kontakt mit dem Werkzeug 26a.

Die Greifervorrichtung 10a weist zumindest eine Schutzeinheit 70a auf. Die Schutzeinheit 70a ist zumindest teilweise während des Arbeitsschritts zumindest an der Greifereinheit 50a befestigt. Die Schutzeinheit 70a ist lediglich an der Greifereinheit 50a befestigt. Die Schutzeinheit 70a ist zumindest mittels einer Rastverbindung an der Greifereinheit 50a befestigt. Alternativ oder zusätzlich ist die Schutzeinheit 70a mittels einer Schraubverbindung an der Greifereinheit 50a befestigt. Alternativ oder zusätzlich ist die Schutzeinheit 70a mittels einer Nietverbindung an der Greifereinheit 50a befestigt. Die Greifervorrichtung 10a weist zumindest ein Befestigungselement 76a auf. Die Schutzeinheit 70a bildet das Befestigungselement 76a. Das Befestigungselement 76a ist zumindest im Wesentlichen einteilig mit der Schutzeinheit 70a verbunden. Das Befestigungselement 76a ist dazu vorgesehen, zumindest die Schutzeinheit 70a auf der Greifereinheit 50a zu befestigen. Das Befestigungselement 76a ist zu einer Stabilisierung der Schutzeinheit 70a auf der Greifereinheit 50a vorgesehen. Das Befestigungselement 76a ist dazu vorgesehen, die Schutzeinheit 70a über das Greiferelement 52a zu positionieren. Das Befestigungselement 76a ist dazu vorgesehen, die Schutzeinheit 70a über das erste Greiferelement 54a und das zweite Greiferelement 56a zu positionieren. Die Schutzeinheit 70a ist zumindest im Wesentlichen von einer Bewegung des Greiferelements 52a unabhängig gekoppelt. Die Schutzeinheit 70a ist zumindest im Wesentlichen von einer Bewegung des ersten Greiferelements 54a und des zweiten Greiferelement 56a unabhängig gekoppelt.

Eine Haupterstreckungsrichtung der Schutzeinheit 70a ist zumindest im Wesentlichen winkelkonstant zu einer Haupterstreckungsebene der Greifereinheit 50a. Die Schutzeinheit 70a bewegt sich bei einer Bewegung der Greifereinheit 50a mit. Eine relative Positionierung zwischen der Greifereinheit 50a und der Schutzeinheit 70a ist während des Arbeitsschritts konstant. Eine Haupterstreckungsrichtung der Schutzeinheit 70a ist zumindest im Wesentlichen senkrecht zu einer Greifebene der Greifereinheit 50a.

Die Schutzeinheit 70a ist zumindest im Wesentlichen haubenförmig ausgestaltet. Die Schutzeinheit 70a ist zumindest im Wesentlichen zylinderförmig. Die Schutzeinheit 70a weist zumindest im Wesentlichen parallel zu einer Greifebene der Greifereinheit 50a zumindest eine Öffnung 86a auf. Die Öffnung 86a ist invariabel. Die Öffnung 86a ist zumindest zu einer Aufnahme des Werkzeugs 26a vorgesehen. Die Öffnung 86a ist zumindest im Wesentlichen eben. Die Kanten der Öffnung 86a sind zumindest im Wesentlichen auf einer Ebene angeordnet. Die Öffnung 86a bildet zumindest teilweise eine Fläche des Zylinders. Die Öffnung 86a bildet vollständig eine Fläche des Zylinders. Die Öffnung 86a ist zumindest auf einer dem Greifelement 52a zugewandten Seite. Die Schutzeinheit 70a ist an einem Ende des Zylinders geschlossen. Die Schutzeinheit 70a ist mit einer tangierenden Halbkugel an dem Ende geschlossen. Die Schutzeinheit 70a ist zumindest im Wesentlichen hohl. Die Schutzeinheit 70a ist zumindest im Wesentlichen blechartig. Die Wände der Schutzeinheit 70a sind zumindest im Wesentlichen blechartig. Die Wände der Schutzeinheit 70a weisen zumindest im Wesentlichen eine konstante Dicke auf. Die Schutzeinheit 70a ist zumindest im Wesentlichen einstückig ausgebildet. Die Schutzeinheit 70a ist zumindest im Wesentlichen aus einem Stück gefertigt.

Die Greifervorrichtung 10a weist zumindest eine Steuereinheit 58a auf. Die Bedieneinheit 22a steuert die Steuereinheit 58a der Greifervorrichtung 10a. Die Steuereinheit 58a ist dazu vorgesehen, mittels eines Sensors, eine Kollisionsvorhersage zu erfassen. Die Steuereinheit 58a ist dazu vorgesehen, basierend auf der Kollisionsvorhersage die Schutzeinheit 70a zu steuern. Die Steuereinheit 58a ist dazu vorgesehen, bei einer Kollisionsvorhersage, ein Greifen des Werkzeugs 26a zumindest im Wesentlichen zu verhindern. Die Greifereinheit 50a weist zumindest den Sensor auf.

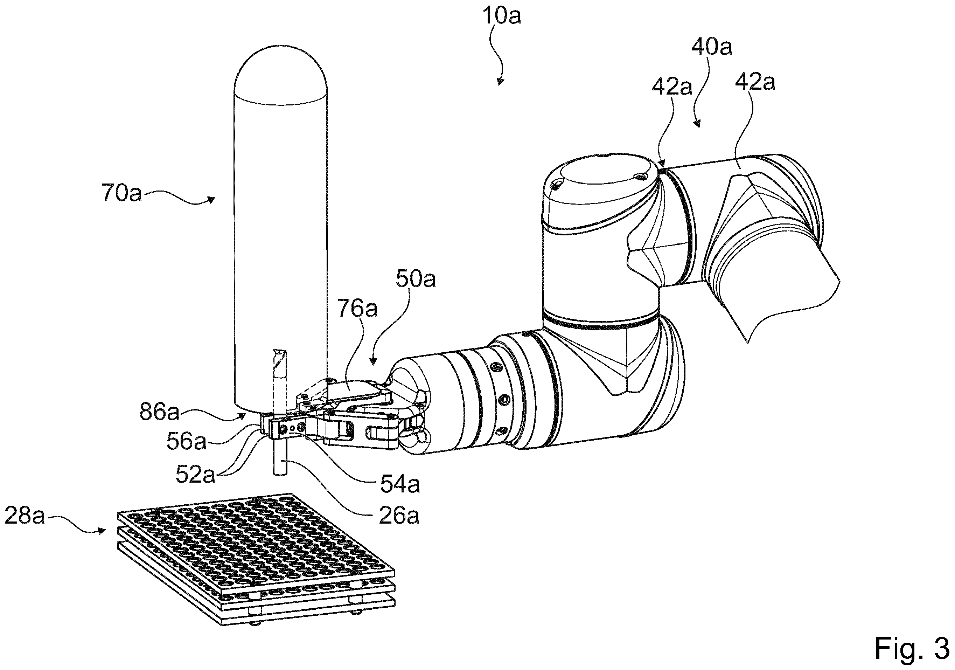

Die Figur 3 zeigt die Greifervorrichtung 10a mit der Greifereinheit 50a während eines Arbeitsschritts. Die Schutzeinheit 70a ist dazu vorgesehen, das Werkzeug 26a zumindest teilweise während des Arbeitsschritts zumindest im Wesentlichen zu umschließen. Die Schutzeinheit 70a ist zumindest dazu vorgesehen, zumindest einen Arbeitsbereich 30a des Werkzeugs 26a zumindest teilweise während des Arbeitsschritts zumindest im Wesentlichen zu umschließen. Die Schutzeinheit 70a ist dazu vorgesehen während des gesamten Arbeitsschritts zumindest einen Arbeitsbereich 30a des Werkzeugs 26a zu umschließen. Die Schutzeinheit 70a ist dazu vorgesehen, das Werkzeug 26a zu umschließen, wobei ein Nutzer 24a während des Arbeitsschritts zumindest von dem Arbeitsbereich 30a des Werkzeugs 26a getrennt ist. Die Schutzeinheit 70a ist während des Arbeitsschritts relativ zum Werkzeug 26a zumindest im Wesentlichen positionsfix. Der Schwerpunkt der Schutzeinheit 70a weist während des Arbeitsschritts zumindest im Wesentlichen denselben Abstand zu dem Schwerpunkt des Werkzeugs 26a auf.

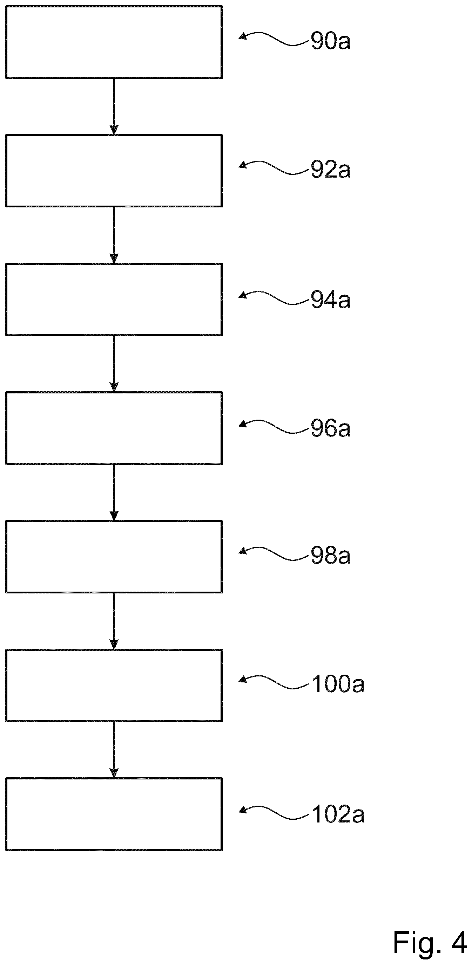

Figur 4 zeigt ein Ablaufdiagramm eines Verfahrens mit der Greifervorrichtung 10a. In zumindest einem Verfahrensschritt 90a wird die Schutzeinheit 70a an der Greifereinheit 50a befestigt. In zumindest einem weiteren Verfahrensschritt 92a wird die Greifereinheit 50a zu einer Aufnahme des Werkzeugs 26a und/oder der Werkzeugaufnahme mit zumindest einem Werkzeug 26a neben oder über dem Werkzeug 26a positioniert. In zumindest einem weiteren Verfahrensschritt 94a wird das Werkzeug 26a von der Schutzeinheit 70a zu einem Großteil umschlossen. In dem Verfahrensschritt 94a wird zumindest der Arbeitsbereich 30a des Werkzeugs 26a von der Schutzeinheit 70a umschlossen. In zumindest einem weiteren Verfahrensschritt 96a wird das Werkzeug 26a mit der Greifereinheit 50a gegriffen. In dem Verfahrensschritt 96a wird das Werkzeug 26a zwischen dem ersten Greiferelement 54a und dem zweiten Greiferelement 56a eingespannt. In zumindest einem weiteren Verfahrensschritt 98a wird die Greifereinheit 50a mit dem durch die Schutzeinheit 70a umschlossenen Werkzeug 26a bewegt. In dem Verfahrensschritt 98a wird die Schutzeinheit 70a mit dem Werkzeug 26a und der Greifereinheit 50a mitbewegt. In dem Verfahrensschritt 98a wird das Werkzeug 26a beispielsweise von dem Werkzeugschrank 16a oder dem Werkzeugwagen 18a zu dem Einstell- und Messgerät 22a bewegt oder umgekehrt. In zumindest einem weiteren Verfahrensschritt 100a wird das Werkzeug 26a freigegeben. In dem Verfahrensschritt 100a werden das erste Greiferelement 54a und das zweite Greiferelement 56a geöffnet. In zumindest einem weiteren Verfahrensschritt 102a wird die Schutzeinheit durch die Greifereinheit von dem Werkzeug entfernt. In dem Verfahrensschritt 102a wird der Arbeitsbereich 30a des Werkzeugs 26a zugänglich gemacht. In dem Verfahrensschritt 102a gibt die Schutzeinheit 70a das Werkzeug 26a frei. Zumindest einer der Verfahrensschritte 90a - 102a bildet einen Teilschritt des Arbeitsschritts aus. Vorzugsweise bilden zumindest die Verfahrensschritte, welchen die Bezugszeichen 96a, 98a und 100a zugeordnet sind Teilschritte des Arbeitsschritts aus. In dem Arbeitsschritt wird bei einem Greifen und/oder bei einem Bewegen des Werkzeugs 26a der Arbeitsbereich 30a des Werkzeugs 26a automatisiert von der Schutzeinheit 70a umschlossen.

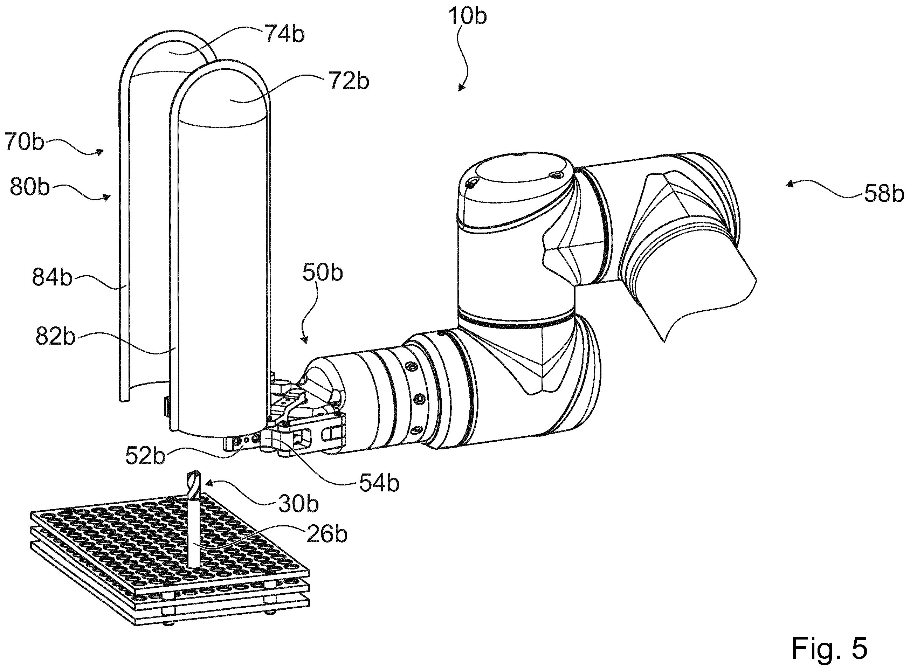

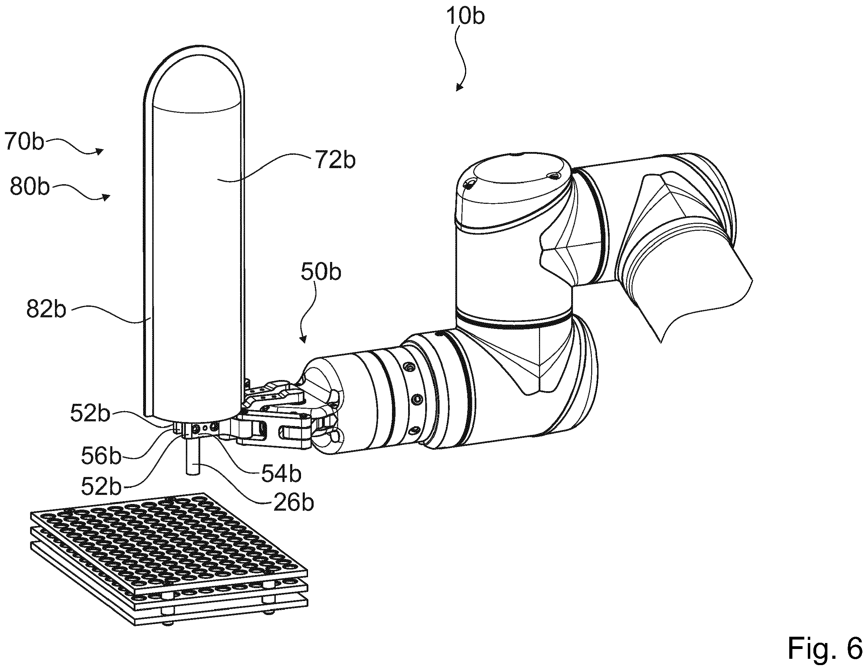

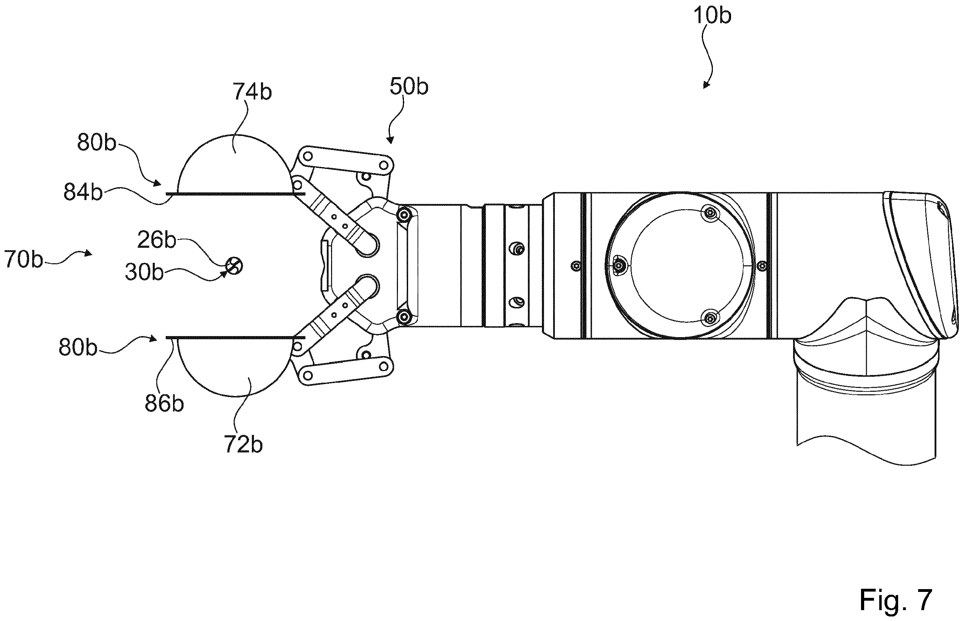

In den Figuren 5 bis 8 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibungen der anderen Ausführungsbeispiele, insbesondere den Figuren 1 bis 4 verwiesen werden kann. Zur Unterscheidung der Ausführungsbeispiele ist der Buchstabe a den Bezugszeichen des Ausführungsbeispiels der Figuren 1 bis 4 nachgestellt. In den Ausführungsbeispielen der Figuren 5 bis 8 ist der Buchstabe a durch die Buchstaben b und c ersetzt.

Die Figur 5 bis 7 zeigt ein weiteres Ausführungsbeispiel einer Greifervorrichtung 10b. Die Greifervorrichtung 10b weist zumindest eine Greifereinheit 50b auf. Die Greifereinheit 50b weist zumindest ein Greiferelement 52b auf. Die Greifereinheit 50b weist zumindest ein erstes Greiferelement 54b auf. Die Greifereinheit 50b weist zumindest ein zweites Greiferelement 56b auf. Das erste Greiferelement 54b und das zweite Greiferelement 56b sind dazu vorgesehen, zumindest ein Werkzeug 26b einzuspannen. Das erste Greiferelement 54b bewegt sich zumindest im Wesentlichen in einer Greifebene. Das zweite Greiferelement 56b bewegt sich zumindest im Wesentlichen in einer Greifebene. Die Greifervorrichtung 10b weist zumindest eine Schutzeinheit 70b auf. Die Schutzeinheit 70b ist zumindest im Wesentlichen zweiteilig. Die Schutzeinheit 70b ist zumindest im Wesentlichen entlang einer Schnittebene geteilt. Die Schnittebene geht zumindest teilweise durch den Schwerpunkt der Schutzeinheit 70b. Die Schnittebene geht zumindest teilweise durch eine Mittelgerade des Zylinders. Die Schutzeinheit 70b weist zumindest ein erstes Schutzelement 72b auf. Das erste Schutzelement 72b bildet zumindest eine Hälfte der Schutzeinheit 70b. Die Schutzeinheit 70b weist zumindest ein zweites Schutzelement 74b auf. Das zweite Schutzelement 74b bildet zumindest eine Hälfte der Schutzeinheit 70b. Das erste Schutzelement 72b und das zweite Schutzelement 74b bilden in dem Arbeitsschritt die Schutzeinheit 70b. Das erste Schutzelement 72b und das zweite Schutzelement 74b sind zumindest im Wesentlichen gleich groß. Das erste Schutzelement 72b und das zweite Schutzelement 74b sind dazu vorgesehen, bei einer Aufnahme des Werkzeugs 26b sich zumindest teilweise zu öffnen. Das erste Schutzelement 72b und das zweite Schutzelement 74b sind dazu vorgesehen, bei einem Greifen des Werkzeugs 26b sich zumindest teilweise zu schließen.

Die Schutzeinheit 70b ist zumindest an dem ersten Greiferelement 54b befestigt. Die Schutzeinheit 70b ist zumindest an dem zweiten Greiferelement 56b befestigt. Das erste Schutzelement 72b ist zumindest an dem ersten Greiferelement 54b befestigt. Das zweite Schutzelement 74b ist zumindest an dem zweiten Greiferelement 56b befestigt. Das erste Greiferelement 54b ist mit dem ersten Schutzelement 72b bewegungstechnisch gekoppelt. Bei einer Bewegung des ersten Greiferelements 54b bewegt sich das erste Schutzelement 72b. Das zweite Greiferelement 56b ist bewegungstechnisch mit dem zweiten Schutzelement 74b gekoppelt. Bei einer Bewegung des zweiten Greiferelements 56b bewegt sich das zweite Schutzelement 74b.

Das erste Schutzelement 72b bewegt sich zumindest im Wesentlichen entlang einer Geraden. Das zweite Schutzelement 74b bewegt sich zumindest im Wesentlichen entlang einer Geraden. Das erste und das zweite Schutzelement 74b bewegen sich zumindest im Wesentlichen auf derselben Geraden. Die Bewegungsgerade des ersten Schutzelements 72b ist bei einem Öffnen der Schutzelemente 72b, 74b zumindest im Wesentlichen parallel zu einer Bewegungsgeraden des ersten Greiferelements 54b. Eine Bewegungsgerade des zweiten Schutzelements 74b ist bei einem Öffnen der Schutzelemente 72b, 74b zumindest im Wesentlichen parallel zu einer Bewegungsgeraden des ersten Greiferelements 54b. Die Bewegungsgerade des ersten Schutzelements 72b ist bei einem Öffnen der Schutzelemente 72b, 74b zumindest im Wesentlichen parallel zu einer Bewegungsgeraden des zweiten Greiferelements 56b. Eine Bewegungsgerade des zweiten Schutzelements 74b ist bei einem Öffnen der Schutzelemente 72b, 74b zumindest im Wesentlichen parallel zu einer Bewegungsgerade des zweiten Greiferelements 56b. Die Bewegungsgerade des ersten Schutzelements 72b ist bei einem Schließen der Schutzelemente 72b, 74b zumindest im Wesentlichen parallel zu einer Bewegungsgeraden des ersten Greiferelements 54b. Eine Bewegungsgerade des zweiten Schutzelements 74b ist bei einem Schließen der Schutzelemente 72b, 74b zumindest im Wesentlichen parallel zu einer Bewegungsgeraden des ersten Greiferelements 54b. Die Bewegungsgerade des ersten Schutzelements 72b ist bei einem Schließen der Schutzelemente 72b, 74b zumindest im Wesentlichen parallel zu einer Bewegungsgeraden des zweiten Greiferelements 56b. Eine Bewegungsgerade des zweiten Schutzelements 74b ist bei einem Schließen der Schutzelemente 72b, 74b zumindest im Wesentlichen parallel zu einer Bewegungsgeraden des zweiten Greiferelements 56b. Eine Bewegungsgerade des ersten Schutzelements 72b und/oder des zweiten Schutzelements 74b ist bei einem Öffnen und/oder Schließen der Schutzelemente 72b, 74b zumindest im Wesentlichen parallel zu einer Greifebene der Greifereinheit 50b. Die Bewegungsgerade ist bei einem Bewegen des ersten Schutzelements 72b zumindest im Wesentlichen senkrecht zu einer Haupterstreckungsrichtung der Greifereinheit 50b. Die Bewegungsgerade ist bei einem Bewegen des zweiten Schutzelements 74b zumindest im Wesentlichen senkrecht zu einer Haupterstreckungsrichtung der Greifereinheit 50b.

Die Schutzeinheit 70b weist zumindest eine Kontakteinheit 80b auf. Die Kontakteinheit 80b ist dazu vorgesehen, die Schutzeinheit 70b zumindest teilweise in dem Arbeitsschritt zu stabilisieren. Die Kontakteinheit 80b ist dazu vorgesehen, zumindest das erste Schutzelement 72b und das zweite Schutzelement 74b zumindest teilweise in dem Arbeitsschritt zueinander zu stabilisieren. Das erste Schutzelement 72b weist zumindest ein erstes Kontaktelement 82b auf. Das zweite Schutzelement 74b weist zumindest ein zweites Kontaktelement 84b auf. Das erste Kontaktelement 82b bildet einen Kontaktrahmen. Das zweite Kontaktelement 84b bildet einen Kontaktrahmen. Das erste Kontaktelement 82b und das zweite Kontaktelement 84b sind zumindest teilweise in dem Arbeitsschritt zumindest im Wesentlich in Kontakt. Das erste Kontaktelement 82b und das zweite Kontaktelement 84b sind in dem Arbeitsschritt verbindungslos in Kontakt. Alternativ sind das erste Kontaktelement 82b und das zweite Kontaktelement 84b in dem Arbeitsschritt zumindest teilweise verbunden. Eine Quererstreckung der Kontakteinheit 80b ist zumindest im Wesentlichen senkrecht zu der Zylinderfläche der Schutzeinheit 70b.

Die Greifervorrichtung 10b weist zumindest eine Steuereinheit 58b auf. Die Steuereinheit 58b ist dazu vorgesehen, eine Bewegung der Greifereinheit 50b zu steuern. Die Steuereinheit 58b ist dazu vorgesehen, eine Bewegung des ersten Greiferelements 54b zu steuern. Die Steuereinheit 58b ist dazu vorgesehen, eine Bewegung des zweiten Greiferelements 56b zu steuern. Die Steuereinheit 58b ist dazu vorgesehen, eine Bewegung der Schutzeinheit 70b zu steuern. Die Steuereinheit 58b ist dazu vorgesehen, eine Bewegung des ersten Schutzelements 72b zu steuern. Die Steuereinheit 58b ist dazu vorgesehen, eine Bewegung des zweiten Schutzelements 74b zu steuern. Die Steuereinheit 58b ist zu einer Positionierung des ersten Schutzelements 72b und des zweiten Schutzelements 74b relativ zum Werkzeug 26b vorgesehen. Die Steuereinheit 58b ist dazu vorgesehen, mittels eines Sensors Ausmaße des Werkzeugs 26b zu erkennen. Die Greifereinheit 50b weist den Sensor auf. Der Sensor ist dazu vorgesehen, die Ausmaße des Werkzeugs 26b zu erfassen und die Ausmaße der Steuereinheit 58b bereitzustellen. Die Steuereinheit 58b ist dazu vorgesehen, basierend auf den Ausmaßen des Werkzeugs 26b, die Schutzeinheit 70b zu bewegen. Die Steuereinheit 58b ist dazu vorgesehen, basierend auf den Ausmaßen des Werkzeugs 26b, das erste Schutzelement 72b und das zweite Schutzelement 74b zu bewegen. Die Greifereinheit 50b weist zumindest den Sensor auf. Die Steuereinheit 58b ist dazu vorgesehen, zumindest teilweise in dem Arbeitsschritt einen Arbeitsbereich 30b des Werkzeugs 26b mit den Schutzelementen 72b, 74b zumindest im Wesentlichen zu umschließen. Die Steuereinheit 58b ist dazu vorgesehen, ein Schließen der Schutzelemente 72b, 74b zumindest dem Ausmaß des Werkzeugs 26b anzupassen.

Die Steuereinheit ist 58b dazu vorgesehen, mittels des Sensors, eine Kollisionsvorhersage zu erfassen. Die Steuereinheit 58b ist dazu vorgesehen, basierend auf der Kollisionsvorhersage die Schutzeinheit 70b zu steuern. Die Steuereinheit 58b ist dazu vorgesehen, basierend auf der Kollisionsvorhersage das erste Schutzelement 72b und das zweite Schutzelement 74b zu bewegen. Die Steuereinheit 58b ist dazu vorgesehen, bei einer Kollisionsvorhersage, ein Greifen des Werkzeugs 26b zumindest im Wesentlichen zu verhindern.

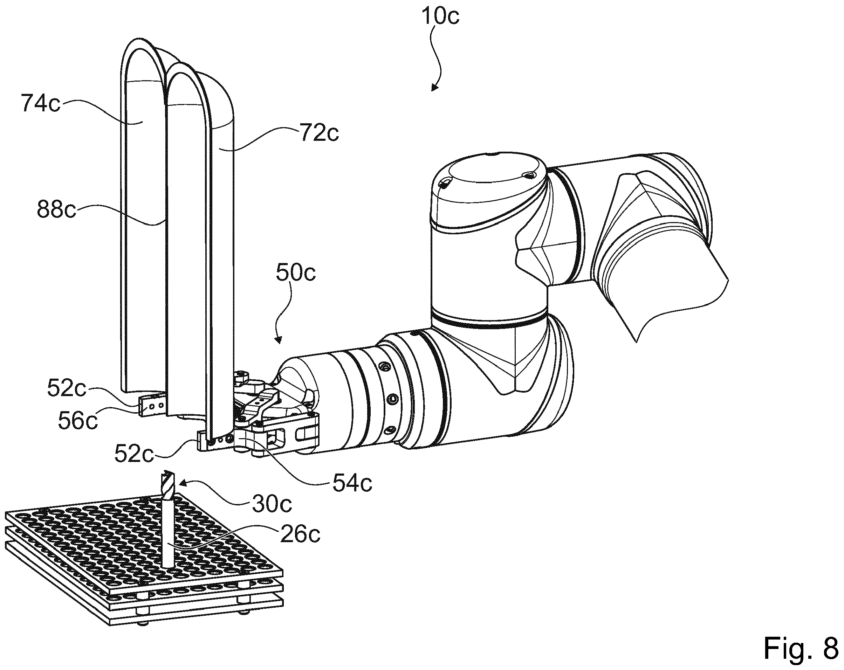

Die Figur 8 zeigt zumindest ein weiteres Ausführungsbeispiel einer Greifervorrichtung 10c. Die Greifervorrichtung 10c weist zumindest eine Schutzeinheit 70c auf. Die Schutzeinheit 70c weist zumindest ein erstes Schutzelement 72c auf. Die Schutzeinheit 70c weist zumindest ein zweites Schutzelement 74c auf. Das erste Schutzelement 72c ist dazu vorgesehen, zumindest einen Arbeitsbereich 30c eines Werkzeugs 26c zumindest im Wesentlichen zu umschließen. Das zweite Schutzelement 74c ist dazu vorgesehen, zumindest den Arbeitsbereich 30c des Werkzeugs 26c zumindest im Wesentlichen zu umschließen. Das erste Schutzelement 72c ist zumindest im Wesentlichen drehbar gelagert. Das zweite Schutzelement 74c ist zumindest im Wesentlichen drehbar gelagert. Die Greifervorrichtung 10c weist zumindest eine Greifereinheit 50c auf. Das erste Schutzelement 72c ist zumindest im Wesentlichen drehbar an der Greifereinheit 50c gelagert. Das zweite Schutzelement 74c ist zumindest im Wesentlichen drehbar an der Greifereinheit 50c gelagert. Die Greifereinheit 50c weist zumindest ein Greiferelement 52c auf. Die Greifereinheit 50c weist zumindest ein erstes Greiferelement 54c auf. Die Greifereinheit 50c weist zumindest ein zweites Greiferelement 56c auf. Das erste Schutzelement 72c ist zumindest im Wesentlichen drehbar an dem ersten Greiferelement 54c befestigt. Das zweite Schutzelement 74b ist zumindest im Wesentlichen drehbar an dem zweiten Greiferelement 56c befestigt. Das erste Schutzelement 72c rotiert zumindest im Wesentlichen um zumindest eine Rotationsachse. Das zweite Schutzelement 74c rotiert zumindest im Wesentlichen um zumindest eine weitere Rotationsachse.

Die Rotationsachse des ersten Schutzelements 72c ist gleich der Rotationsachse des zweiten Schutzelements 74c. Die Rotationsachse ist zumindest im Wesentlichen entlang einer Kante der Schutzeinheit 70c. Die Rotationsachse ist zumindest im Wesentlichen entlang einer Schnittkante des ersten Schutzelements 72c. Die Rotationsachse ist zumindest im Wesentlichen entlang einer Schnittkante des zweiten Schutzelements 74c. Das erste Schutzelement 72c und das zweite Schutzelement 74c schließen zumindest im Wesentlichen über einen Klappmechanismus.

Alternativ gehen die Rotationsachse des ersten Schutzelements 72c und die Rotationsachse des zweiten Schutzelements 74c zumindest im Wesentlichen durch einen Schwerpunkt der Schutzeinheit 70c. Bei einem Öffnen der Schutzelemente 72c, 74c drehen sich die Schutzelemente 72c, 74c zumindest im Wesentlichen ineinander ein. Bei einem Schließen der Schutzelemente 72c, 74c drehen sich die Schutzelemente 72c, 74c zumindest im Wesentlichen auf.

Die Schutzeinheit 70c weist zumindest ein Scharniergelenk 88c auf. Das Scharniergelenk 88c ist dazu vorgesehen, das erste Schutzelement 72c mit dem zweiten Schutzelement 74c zumindest rotierbar zu verbinden. Das Scharniergelenk 88c ist zumindest im Wesentlichen einteilig mit dem ersten Schutzelement 72c und dem zweiten Schutzelement 74c verbunden. Das Scharniergelenk 88c weist zumindest ein biegbares Material auf. Die Schutzeinheit 70c ist zumindest im Wesentlichen einteilig ausgebildet. Alternativ und/oder zusätzlich weist das Scharniergelenk 88c zumindest ein Schwenkelement auf. Das Schwenkelement ist mit dem ersten Schutzelement 72c und dem zweiten Schutzelement 74c verbunden.

Alternativ sind das erste Schutzelement 72c und das zweite Schutzelement 74c bei einem Schließen und/oder Öffnen verbindungslos gekoppelt.

## Patentansprüche

1. Greifervorrichtung (10a; 10b; 10c) mit zumindest einer Greifereinheit (50a; 50b; 50c), welche zumindest dazu vorgesehen ist, in zumindest einem Arbeitsschritt ein Werkzeug (26a; 26b; 26c) und/oder eine Werkzeugaufnahme mit zumindest einem Werkzeug (26a; 26b; 26c) zu greifen und/oder zu bewegen, und mit zumindest einer Schutzeinheit (70a; 70b; 70c), welche dazu vorgesehen ist, zumindest einen Arbeitsbereich (30a; 30b; 30c) des Werkzeugs (26a; 26b; 26c) zumindest teilweise während des Arbeitsschritts zumindest im Wesentlichen zu umschließen, **dadurch gekennzeichnet, dass** die Schutzeinheit (70a; 70b; 70c) zumindest teilweise während des Arbeitsschritts zumindest an der Greifereinheit (50a; 50b; 50c) befestigt ist.

2. Greifervorrichtung (10a; 10b; 10c) nach Anspruch 1, **dadurch gekennzeichnet, dass** eine Haupterstreckungsrichtung der Schutzeinheit (70a; 70b; 70c) zumindest im Wesentlichen winkelkonstant zu der Greifereinheit (50a; 50b; 50c) ist.

3. Greifervorrichtung (10a; 10b; 10c) nach Anspruch 1 oder 2, **dadurch gekennzeichnet, dass** die Schutzeinheit (70a; 70b; 70c) zumindest im Wesentlichen haubenförmig ausgestaltet ist.

4. Greifervorrichtung (10a; 10b; 10c) nach einem der vorhergehenden Ansprüchen, **dadurch gekennzeichnet, dass** die Schutzeinheit (70a; 70b; 70c) zumindest eine invariable Öffnung (86a; 86b; 86c) aufweist, welche dazu vorgesehen ist das Werkzeug (26a; 26b; 26c) aufzunehmen.

5. Greifervorrichtung (10a) nach einem der vorhergehenden Ansprüche, **dadurch gekennzeichnet, dass** die Schutzeinheit (70a) zumindest im Wesentlichen einstückig ausgebildet ist.

6. Greifervorrichtung (10a) nach einem der vorhergehenden Ansprüchen, **dadurch gekennzeichnet, dass** die Greifereinheit (50a) zumindest ein Greiferelement (52a) aufweist, welches dazu vorgesehen ist, das Werkzeug (26a) zu greifen, wobei die Schutzeinheit (70a) zumindest im Wesentlichen von einer Bewegung des Greiferelements (52a) unabhängig gekoppelt ist.

7. Greifervorrichtung (10a; 10b) zumindest nach einem der Ansprüche 1 bis 4, **dadurch gekennzeichnet, dass** die Greifereinheit (50a; 50b) zumindest ein erstes Greiferelement (54b; 54c) und zumindest ein zweites Greiferelement (56b; 56c) aufweist, wobei das erste Greiferelement (54a; 54b) und das zweite Greiferelement (54a; 54b) dazu vorgesehen sind, zumindest das Werkzeug (26a; 26b; 26c) einzuspannen, wobei die Schutzeinheit (70a; 70b) zumindest teilweise an dem ersten Greiferelement (54b; 54c) und/oder dem zweiten Greiferelement (56a; 56c) befestigt ist.

8. Greifervorrichtung (10b; 10c) zumindest nach Anspruch 7, **dadurch gekennzeichnet, dass** die Schutzeinheit (70b; 70c) zumindest ein erstes Schutzelement (72b; 72c), welches an dem ersten Greiferelement (54a; 54b) befestigt ist, und zumindest ein zweites Schutzelement (74b; 74c), welches zumindest an dem zweiten Greiferelement (56b; 56c) befestigt ist, aufweist.

9. Greifervorrichtung (10b; 10c) zumindest nach Anspruch 8, **dadurch gekennzeichnet, dass** das erste Greiferelement (54b; 54c) und das zweite Greiferelement (56b; 56c) bewegungstechnisch mit dem ersten Schutzelement (72b; 72c) und/oder dem zweiten Schutzelement (74b; 74c) gekoppelt sind.

10. Greifervorrichtung (10b) zumindest nach Anspruch 9, **dadurch gekennzeichnet, dass** eine Bewegungsgerade des ersten Schutzelements (72b) und/oder des zweiten Schutzelements (74b) bei einem Öffnen und/oder Schließen der Schutzelemente (72b; 74b) zumindest im Wesentlichen parallel zu einer Bewegungsgerade des ersten Greiferelements (54b) und/oder des zweiten Greiferelements (56b) ist.

11. Greifervorrichtung (10a; 10b; 10c) nach einem der vorhergehenden Ansprüche, **gekennzeichnet durch** zumindest eine Steuereinheit (58b), welche dazu vorgesehen ist, mittels eines Sensors Ausmaße des Werkzeugs (26b) zu erkennen und darauf basierend ein Bewegen der Schutzeinheit (70b) zu steuern.

12. Greifervorrichtung (10c) zumindest nach Anspruch 9, **dadurch gekennzeichnet, dass** das erste Schutzelement (72c) und/oder das zweite Schutzelement (74c) zumindest im Wesentlichen drehbar gelagert sind.

13. Greifervorrichtung (10a; 10b; 10c) zumindest nach Anspruch 12, **dadurch gekennzeichnet, dass** die Rotationsachse des ersten Schutzelements (72c) gleich der Rotationsachse des zweiten Schutzelements (74c) ist.

14. Verfahren mit einer Greifervorrichtung (10a; 10b; 10c) nach einem der vorherigen Ansprüche, wobei in zumindest einem Arbeitsschritt bei einem Greifen und/oder Bewegen eines Werkzeugs (26a) und/oder einer Werkzeugaufnahme zumindest ein Arbeitsbereich des Werkzeugs (26a) zumindest im Wesentlichen automatisiert umschlossen wird.

15. Kollaborativer Roboter (12a; 12b; 12c) mit einer Greifervorrichtung (10a; 10b; 10c) nach einem der Ansprüche 1 bis 13.

16. Einstell- und Messgerätesystem (14a; 14b; 14c) mit einer Greifervorrichtung (10a; 10b; 10c) nach einem der Ansprüche 1 bis 13.
